# EUROPÄISCHE PATENTSCHRIFT

(11) **EP 0 787 573 B1**
(45) Veröffentlichungstag und Bekanntmachung des Hinweises auf die Patenterteilung: **22.08.2001**
(21) Anmeldenummer: 97100942.8
(22) Anmeldetag: 22.01.1997
(51) Int. Cl.: B29C 70/22

(54) **Flächiger Verbundwerkstoff**
Flat composite material
Matière composite plate

(30) Priorität: 02.02.1996 DE 19603738
(43) Veröffentlichungstag der Anmeldung: 06.08.1997
(73) Patentinhaber: BASF AKTIENGESELLSCHAFT, 67056 Ludwigshafen (DE)
(72) Erfinder: Dittmar, Harri, 67271 Battenberg (DE); Brentrup, Karl-Ludwig, 49504 Lotte (DE)

(56) Entgegenhaltungen:
- EP-A- 0 512 431
- WO-A-94/01272
- GB-A- 2 106 031
- US-A- 3 993 828
- US-A- 4 800 114
- DATABASE WPI Section Ch, Week 9318 Derwent Publications Ltd., London, GB; Class A32, AN 93-148716 XP002030648 & JP 05 084 736 A (SEKISUI JUSHI KK) , 6.April 1993
- DATABASE WPI Section Ch, Week 9315 Derwent Publications Ltd., London, GB; Class A18, AN 93-121863 XP002030649 & JP 05 059 630 A (SAKASE ADOTEC KK) , 9.März 1993

## Beschreibung

Die Erfindung betrifft einen flächigen Verbundwerkstoff aus einer Polyolefinmatrix und einem Fasergewebe als Verstärkungsmaterial.

Verbundwerkstoffe aus einer Polypropylenmatrix und Glasfasermatten als Verstärkungsmaterial sind bekannt. Um höhere Steifigkeiten zu erzielen, wurde auch schon vorgeschlagen, statt Fasermatten Glasfasergewebe zur Verstärkung einzusetzen (s. z.B. DE-A 35 35 272). Bauteile aus derartigen Verbundwerkstoffen versagen aber, wenn sie hohen Schlagbelastungen ausgesetzt sind. Sie dürfen bei stoßartiger Belastung sich zwar verformen, sie sollten aber nicht brechen oder gar splittern. Diese Anforderungen können mit herkömmlichem glasmattenverstärktem und auch mit glasgewebeverstärktem Polypropylen nicht erfüllt werden, da deren Bruchdehnung und Zähigkeit zu niedrig sind.

Der Erfindung lag daher die Aufgabe zugrunde, faserverstärkte Verbundwerkstoffe mit erhöhter Bruchdehnung bereitzustellen.

Diese Aufgabe wird erfindungsgemäß gelöst durch die Merkmale des mabhängigen Anspruchs 1.

Als Polyolefine sind Ethylen- und Propylenhomo- und copolymerisate bevorzugt. Besonders gut geeignet ist Polypropylen mit einem Schmelzindex MFI zwischen 5 und 500, insbesondere zwischen 50 und 400 [g/10 min] (bei 230°C/2,16 kg), sowie entsprechende Pfropfcopolymerisate, z.B. mit Acrylsäure oder-Maleinsäureanhydrid. Wenn man als Polyolefinmatrix eine Mischung verwendet aus 99 bis 80 Gew.-% Polypropylen und 1 bis 20 Gew.-% eines mit Maleinsäureanhydrid gepfropften Polypropylens, dann erhält man Verbundwerkstoffe mit besonders guter Festigkeit und Steifigkeit. Dem Polyolefin können bis zu 100 Gew.-% Recyclat von aufgearbeitetem Abfallmaterial mit 20 bis 50 Gew.-% Glasfasern zugesetzt sein, ferner kann es die üblichen Zusatzstoffe wie Stabilisatoren, Füllstoffe und Flammschutzmittel enthalten.

Das erfindungsgemäße Gewebe kann aus üblichen Polyesterfasern bestehen. Besonders hohe Zähigkeits- und Bruchdehnungswerte erhält man aber, wenn man ein Gitter einsetzt, welches Lücken zwischen den Maschen aufweist. Besonders bevorzugt ist ein sogenanntes Drehergewebe, bei dem die einzelnen Fasern des Gewebes (entweder in Kett- oder in Schußrichtung oder in beiden Richtungen) verdreht sind. Derartiges Drehergewebe wird z.B. von der Firma C. Cramer + Co. Industriegewebe aus gedrehten Polyesterfasern der Firma AKZO Nobel hergestellt, z.B. aus Trevira 710 dtex 1670 Z 60 und Trevira 710 dtex 2200 Z 100. Das Flächengewicht derartiger Gewebe liegt im Bereich von 250 bis 400 g/m².

Das Verstärkungsmaterial für den erfindungsgemäßen Verbundwerkstoff besteht zumindest teilweise aus dem Polyesterfaser-Gewebe. Daneben können im Verbundwerkstoff noch Schichten üblicher Glasfasermatten angeordnet sein. Das Gewichtsverhältnis Glasfasern zu Polyesterfasern beträgt dabei 6 : 1 bis 1 : 1, insbesondere 4 : 1 bis 2 : 1. Besonders bevorzugte Schichtenfolgen der Fasergebilde im Verbundwerkstoff sind:
A. Polyestergewebe
   Glasmatten
   Glasmatten
   Polyestergewebe
B. Polyestergewebe
   Glasmatten
   Polyestergewebe
   Polyestergewebe
   Glasmatten
   Polyestergewebe

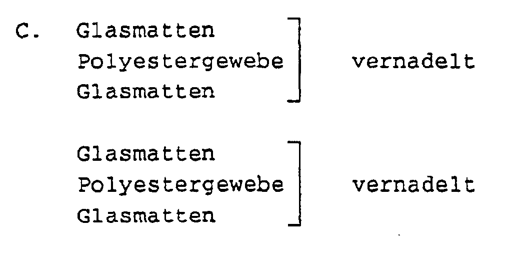

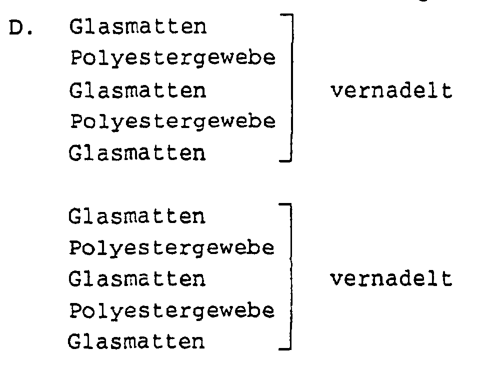

Die Herstellung des erfindungsgemäßen Verbundwerkstoff kann z.B. dadurch erfolgen, daß man in eine Doppelbandpresse Polyolefin-Schmelzbänder oder -folien, Glasfasermatten und Polyesterfaser-Gewebe zuführt und miteinander verpreßt. Die Gewebe werden dabei vorzugsweise als Außenschichten zugeführt; bei den oben skizzierten Schichtenfolgen A bis D wird das Polyolefin jeweils in die Mitte zwischen die beiden gleichartigen Faserschichten eingeführt. Zur Erzielung besonderer Effekte können zusätzlich an den beiden Oberflächen weitere Polyolefinschichten vorgesehen werden.

Es ist auch möglich, Glasfasermatten mit Polyesterfaser-gewebe zusammenzunadeln, wie es im Prinzip in DE-A 35 35 272 beschrieben ist, und das erhaltene kombinierte Verstärkungsmaterial mit dem Polyolefin zu verpressen. Ein derartiger Schichtenaufbau ist in den Schichtenfolgen C und D skizziert. Durch das Vernadeln mit der Glasfasermatte wird ein Schrumpfen des Polyesterfaser-Gewebes verhindert.

Bei der Herstellung der erfindungsgemäßen Verbundwerkstoffe sind die Mengenverhältnisse so zu wählen, daß im fertigen Werkstoff der Fasergehalt 20 bis 70, vorzugsweise 30 bis 50 Gew.-% beträgt. Bei einer bevorzugten Ausführungsform werden in eine Doppelbandpresse gleichzeitig die Verstärkungsmaterialien und Polyolefinschmelze zugeführt und bei Drücken zwischen 1 und 50 [bar] miteinander verpreßt. Grundsätzlich ist es auch möglich, das Polyolefin in Form von Folien, Pulver, Granulat, sowie als Lösung oder Emulsion mit den Fasermatten zusammenzuführen und gemeinsam oberhalb der Schmelztemperatur diskontinuierlich oder kontinuierlich, z.B. auf einem Kalander oder einem Glättwerk, zu verpressen. Das Verpressen muß unter einem so hohen Druck vorgenommen werden, daß nach dem Abkühlen, vorzugsweise auf Raumtemperatur, ein kompaktes, flächiges Halbzeug entsteht.

Dieses Halbzeug kann zugeschnitten und nach üblichen Methoden durch Pressen oder Tiefziehen bei Temperaturen oberhalb des Erweichungsbereichs des Thermoplasten zu Formteilen verarbeitet werden.

### Beispiel 1

Auf einer Doppelbandpresse werden Polypropylen-Schmelzefilme (Schmelzindex 150 g/10 min bei 230°C, 2,16 kg) und Verstärkungsmaterialien in folgender Schichtenfolge zusammengeführt und bei 190°C und 2 bar miteinander verpreßt:
Polypropylen-Film 775 g/m²
Polyestergewebe 320 g/m²
Glasfasermatte 600 g/²
Polypropylen-Film 1030 g/m²
Glasfasermatte 600 g/m²
Polyestergewebe 320 g/m²
Polypropylen-Film 775 g/m².

Die Dicke der erhaltenen Halbzeuge beträgt 0,38 cm . Aus den Halbzeugen werden Platten mit den Abmessungen 6 x 6 cm herausgeschnitten. Sie zeigen im Durchstoßversuch nach ISO 6603/2 hervorragend gute Zähigkeits- und Bruchdehnungswerte.

### Beispiel 2

Unter den in Beispiel 1 angegebenen Bedingungen werden folgende Schichten miteinander verpreßt:
Polypropylen-Film 865 g/m² 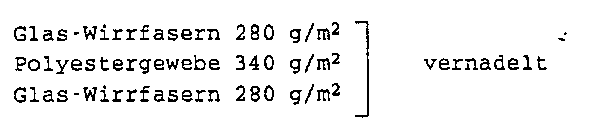 Polypropylen-Film 725 g/m²

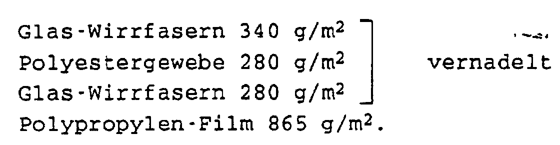

Beim Vernadeln betrug die Einstichdichte 60 cm⁻², die Einstichtiefe 8,0 mm.

## Patentansprüche

1. Thermoplastisch verarbeitbarer, kompakter, flächiger Verbundwerkstoff aus einer Polypropylenmatrix und 20 bis 70 Gew.-% eines Verstärkungsmaterials, dadurch gekennzeichnet, daß das Verstärkungsmaterial Schichten aus Glasfasermatten und Schichten aus Polyesterfaser-Gewebe im Gewichtsverhältnis 6:1 bis 1:1 enthält.

2. Flächiger Verbundwerkstoff nach Anspruch 1, dadurch gekennzeichnet, daß das Gewebe ein Gittergewebe ist, welches Lücken zwischen den Maschen aufweist.

3. Flächiger Verbundwerkstoff nach Anspruch 1, dadurch gekennzeichnet, daß das Gewebe aus gedrehten Polyesterfasern besteht.

4. Flächiger Verbundwerkstoff nach Anspruch 1, dadurch gekennzeichnet, daß Glasfasermatten und Polyesterfaser-Gewebe miteinander vernadelt sind.

## Claims

1. A thermoplastically processible, compact, sheetlike composite comprising a polypropylene matrix and from 20 to 70% by weight of a reinforcing material, wherein the reinforcing material comprises layers of glass fiber mats and layers of polyester fiber weave in a weight ratio of from 6:1 to 1:1.

2. A sheetlike composite as claimed in claim 1, wherein the weave is a lattice weave with gaps between the meshes.

3. A sheetlike composite as claimed in claim 1, wherein the weave comprises twisted polyester fibers.

4. A sheetlike composite as claimed in claim 1, wherein glass fiber mats and polyester fiber weave are needled together.

## Revendications

1. Matériau composite plan, compact, pouvant être mis en oeuvre par voie thermoplastique, à base d'une matrice de polypropylène et de 20 à 70 % en poids d'un matériau de renforcement, caractérisé en ce que le matériau de renforcement contient des couches de nappes en fibres de verre et des couches de tissus en fibres de polyester en un rapport pondéral de 6 : 1 à 1 : 1.

2. Matériau composite plan selon la revendication 1, caractérisé en ce que le tissu est un tissu à réseau qui présente des lacunes entre les mailles.

3. Matériau composite plan selon la revendication 1, caractérisé en ce que le tissu est à base de fibres de polyester torsadées.

4. Matériau composite plan selon la revendication 1, caractérisé en ce que les nappes en fibres de verre et les tissus en fibres de polyester sont aiguilletés ensemble.
